(19) Europäisches Patentamt
European Patent Office
Office européen des brevets

(11) Publication number: **0 409 093 A2**

(12) **EUROPEAN PATENT APPLICATION**

(21) Application number: **90113382.7**

(22) Date of filing: **12.07.90**

(51) Int. Cl.5: **C08G 69/48**

(30) Priority: **17.07.89 US 380916**

(43) Date of publication of application: **23.01.91 Bulletin 91/04**

(84) Designated Contracting States: **BE DE FR GB IT NL**

(71) Applicant: **BASF CORPORATION**
**P.O. Drawer "D"**
**Williamsburg Virginia 23187(US)**

(72) Inventor: **Hoyt, Matthew Buckingham**
**5 Muirfield Court**
**Arden, North Carolina 28704(US)**
Inventor: **Davis, Edward Alan**
**P.O. Box 693**
**Candler, North Carolina 28715-0693(US)**
Inventor: **Hu, Harry Yehrom**
**48 Overlook Road, No. 304**
**Asheville, North Carolina 28803(US)**

(74) Representative: **Huber, Bernhard, Dipl.-Chem. et al**
**Möhlstrasse 22 Postfach 860 820**
**D-8000 München 86(DE)**

(54) **Polyamide fibers having reduced amino end groups, light-dyed and stain resistant polyamide fibers made therefrom, and method of preparation.**

(57) Polyamide fibers reacted with an epsilon-caprolactone compound have a reduced affinity for acid dyes. The fiber finds particular application in preparing two-tone yarn. Additionally, the polyamide fibers can be treated with one or more stainblockers to produce a stain resistant polyamide fiber having excellent resistance to acid dye colorants.

EP 0 409 093 A2

Xerox Copy Centre

# POLYAMIDE FIBERS HAVING REDUCED AMINO END GROUPS, LIGHT-DYED AND STAIN RESISTANT POLYAMIDE FIBERS MADE THEREFROM, AND METHOD OF PREPARATION

## BACKGROUND OF THE INVENTION

### A. Field of the Invention

This invention relates to polyamide fibers having a reduced affinity for acid dyes; the reduced affinity resulting from reacting the polyamide with a lactone having a seven-membered ring.

The term "fiber" as used herein includes fibers of extreme or indefinite length (i.e., filaments) and fibers of short length (i.e., staple). The term "yarn" as used herein means a continuous strand of fibers.

The terms "stain" and "staining" as used herein with reference to polyamide fibers means discoloration of such fibers caused by a chemical reaction thereof with a substance such as an acid dye.

### B. Description of the Prior Art

Polyamide fibers have found widespread use in the home and industry as carpets, drapery material, upholstery, and clothing. For instance, carpets made from polyamide fibers are a popular floor covering for residential and commercial applications. Such carpets are relatively inexpensive and have a desirable combination of qualities, such as durability, aesthetics, comfort, safety, warmth, and quietness. Furthermore, such carpets are available in a wide variety of colors, patterns, and textures.

Polyamides are normally dyed with acid dyes by forming an ionic bond between the dyes and the protonated terminal amine groups ($-NH_3+$) (which are also known as the polyamide's "free amines" or "free amino end groups") present in the polyamide polymer chain. In certain instances, it is desirable to decrease the dyeability of polyamide fibers, especially nylon 6 fibers which contain a large number of acid dye sites. Such fibers have a reduced affinity for acid dyes. When such fibers are combined with polyamide fibers having a normal dyeability, and dyed, the resulting yarns have a two-tone effect. Representative of a procedure for reducing the dyeability of polyamide fibers is disclosed in United States Patent 3,328,341, which is hereby incorporated by reference.

Polyamide fibers are severely and permanently stained when contacted with certain artificial and natural colorants present in common household beverages. Examples of such beverages include coffee, red wine, and soft drinks. One of the commonly used acid dye colorants used in beverages is FD&C Red Dye No. 40, which is also known as Color Index Food Red 17. When a beverage containing this dye contacts polyamide fibers, severe staining can result. As a result thereof, many carpets containing polyamide fibers such as nylon 6, nylon 66, and the like are replaced not because the carpet wears out, but because of staining.

In an attempt to alleviate the soiling and even staining of carpets containing the polyamide fibers, the polyamide fibers are sometimes treated with fluorochemicals for the purpose of reducing the tendency of soil adhering to the fibers of the carpet and to reduce wettability of the fibers. Although such a treatment offers some protection against soiling, the treatment affords little protection to the carpet from spills containing acid dye colorants unless the spills are immediately removed from the carpet, i.e., before the carpet has been wetted out with the stain.

Various compounds, sometimes referred to as stainblockers, including sulfonated aliphatic or aromatic compounds including sulfonated naphthol- or sulfonated phenol-formaldehyde condensation products have been applied to polyamide fibers in order to impart stain resistance to the fibers. A problem associated with such products is that large amounts of these compounds must be utilized to achieve sufficient stain resistance in certain fibers.

## SUMMARY OF THE INVENTION

The present invention provides polyamide fibers made from the reaction of a polyamide and a lactone having 7 ring members in which preferably at least 40% of the amino end groups have been reacted with the lactone. The polyamide fibers of the invention have a reduced affinity for acid dyes and dyeability and,

when combined with normal polyamide fibers to form a yarn, the resulting yarn can be dyed to produce a two-tone yarn.

In another aspect of the present invention, the polyamide fibers having the reduced amino end group content can be treated with one or more stainblockers to produce polyamide fibers having excellent resistance to acid dye colorants. Carpets containing these stain resistant polyamide fibers can, upon exposure to spills from acid dye colorants, such red wines, soft drinks, and the like, withstand substantial staining for extended periods of time.

## DESCRIPTION OF THE PREFERRED EMBODIMENTS

The lactones suitable for use in this invention are epsilon-caprolactone compounds having the following general formula:

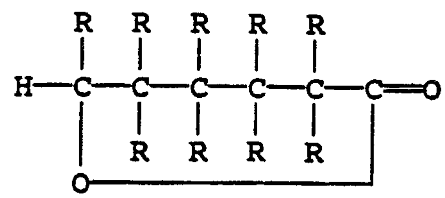

wherein at least six of the R's are hydrogen and the remainder are hydrogen, organic radicals such as straight chain, branched, or cyclic alkyl groups, alkoxy groups, or single ring aromatic groups, none of the groups contain more than about twelve carbon atoms, and the total number of carbon atoms in the groups on a lactone ring does not exceed about twelve carbon atoms. Unsubstituted epsilon-caprolactone (every R is a hydrogen) is derived from 6-hydroxyhexanoic acid and is the preferred epsilon-caprolactone compound for use in the present invention. Substituted epsilon-caprolactones are prepared by reacting a corresponding substituted cyclohexanone with an oxidizing agent, such as peracetic acid.

Examples of organic radicals include alkyl groups such as methyl, ethyl, propyl, isopropyl, butyl, sec-butyl, isobutyl, tertbutyl, pentyl, isopentyl, iso-hexyl, 3-methylpentyl, 2,3- dimethylbutyl, heptyl, octyl, nonyl, decyl, undecyl, dodecyl, alkoxy groups such as methoxy, ethoxy, propoxy, isopropoxy, butoxy, sec-butoxy, tert-butoxy, and the like, and substituted or unsubstituted phenyl, cyclohexyl, cyclopentyl, and the like.

Substituted epsilon-caprolactone compounds include various monoalkyl epsilon-caprolactone compounds such as the monomethyl-, monoethyl-, monopropyl-, monoisopropyl-, etc., to monododecyl epsilon-caprolactones; dialkyl epsilon-caprolactones in which two alkyl groups are substituted on the same or different carbon atoms, but not both on the epsilon carbon atom; trialkyl epsilon-caprolactones in which two or three carbon atoms in the lactone ring are substituted; so long as the epsilon carbon atom is not disturbed, alkoxy epsilon-caprolactones such as methoxy and ethoxy epsilon-caprolactones; and cycloalkyl, aryl, and aralkyl epsilon-caprolactones such as cyclohexyl, phenyl and benzyl epsilon-caprolactones.

Representative examples of substituted epsilon-caprolactone compounds include:

2-methyl epsilon-caprolactone;
6-ethyl epsilon-caprolactone;
3-propyl epsilon-caprolactone;
4-n -butyl epsilon-caprolactone;
5-isopentyl epsilon-caprolactone;
5,5′-dimethyl epsilon-caprolactone;
2-methyl-6-ethyl epsilon-caprolactone;
6-octyl epsilon-caprolactone;
6-cyclohexyl epsilon-caprolactone;
6-benzyl epsilon-caprolactone;
2,4,6-trimethyl epsilon-caprolactone;
2,3,3′4,5,6-hexamethyl epsilon-caprolactone;
and mixtures thereof.

Polyamides suitable for use in the present invention include synthetic polymeric material having recurring amide groups (-CO-NH-) as an integral part of the polymer chain. Examples of such polyamides include homopolyamides and copolyamides which are obtained by the polymerization of lactam or

aminocaprionic acid or a copolymerization product from mixtures of diamines together with dicarboxylic acids or mixtures of lactams.

Typical polyamides include nylon 6 (poly(epsilon-caprolactam)), nylon 66 (polyhexamethyleneadipamide), nylon 6/10, nylon 6/12, nylon 11, nylon 12, copolymers thereof, or mixtures thereof. Polyamides can be also copolymers of nylon 6 or nylon 6,6 and a nylon salt obtained by reacting a dicarboxylic acid component such as terephthalic acid, isophthalic acid, adipic acid, or sebacic acid with a diamine such as hexamethylenediamine or 1,4-bisaminomethylcyclohexane.

The precise manner that epsilon-caprolactone compound functions to reduce staining of the polyamide is not fully understood and need not be. It is believed, however, that the epsilon-caprolactone compound reacts with the amino end groups in the polyamide and thus reduces a portion of the acid dye sites normally present therein. The polyamide will then have hydroxy end groups in place of the amine end groups. Regardless of the theory proposed, it is sufficient to point out that the epsilon- caprolactone compounds operate successfully in the manner disclosed therein.

The amounts of epsilon-caprolactone compound added to the fiber-forming polyamide will vary, depending on the results desired and the polyamide used in the preparation of the fiber. For instance, since nylon 6, poly(epsilon-caprolactam), accepts acid dyes more readily than nylon 66, polyhexamethylene-dipamide, larger amounts of the epsilon-caprolactone compound will be required for nylon 6 than nylon 66 in order to achieve the same amino end group content. Amounts less than 0.2% by weight based on the weight of the polyamide, in general, do not cause appreciable blocking of the amino end groups and attendant lowering of dyeability in the polymer. While there is no upper limit with respect to the amount of epsilon-caprolactone compound which can be added, it has been found that amounts above 3% by weight based on the weight of the polyamide do not further reduce the amine end group content to any appreciable extent. Preferably, amounts of epsilon-caprolactone ranging from about 0.5% to about 2% by weight based on the weight of the polyamide are utilized.

The polyamide fibers of the present invention preferably have a terminal amino-group content of less than 25 equiv./$10^6$g. For light dye usage, the fibers preferably have terminal amino-group content in the range of from about 8 to 18 equiv./$10^6$g and, more preferably, a terminal amino group content of from about 10 to about 13 equiv./$10^6$g. When utilized to prepare stain resistant fibers, the terminal amino group content is preferably 4 to about 25 equiv./$10^6$g and most preferably about 15 to about 25 equiv./$10^6$g.

Various methods of incorporating the epsilon-caprolactone compounds into the polyamide can be utilized, and are known to persons skilled in the art. For example, it may be added directly to the polymer melt in any stage of the process prior to extrusion. In one method, it is added to granules or chips of polyamide prior to melt formation and thoroughly tumbled therewith to effect adequate mixing. In the preferred practice of the invention, the process comprises adding the epsilon-caprolactone compound to polyamide chips at a feed zone of an extruder using a feed pump. Subsequently, epsilon-caprolactone compound and polyamide chips are mixed and melt processed at temperatures usually from about 255° to about 280° C.

Conventional melting and spinning procedures and equipment customarily used in the production of polyamide fibers may be used with the epsilon-caprolactone modified polymer and the fiber product may be drawn and processed into yarn by any known means. The resulting yarn can be woven into fabrics or tufted into carpets. The polyamide fibers can be dyed using standard procedures. Various additives of the type normally used, such as lubricants and mould release agents, nucleating agents, pigments, dyes, reinforcing or non-reinforcing fillers, such as mineral fibers, glass and asbestos fibers, microbeads of glass, talcum, silicon dioxide or mica, antistatic agents, and plasticizers may be added to the polymers.

The polyamide fibers reacted with the lactone are processed into stain resistant polyamide fiber by contacting the fibers containing the epsilon-caprolactone compounds with one or more stainblockers. Examples of suitable stainblockers are disclosed in U.S. Patents 4,822,373; 4,680,212; and 4,501,212, which are hereby incorporated by reference.

Exemplary stainblockers suitable for use in the present invention include any chemical which is capable of functioning as a stainblocker, such as sulfonated naphthol- or sulfonated phenolformaldehyde. These products are preferably linear, low molecular weight condensation products, that is, products having an average molecular weight of less than about 1000, for example, in the range of 250 to 700. Such products are water-soluble and may be prepared by conventional art-recognized techniques, for example, by condensation of formaldehyde with one or more phenols in a mole ratio of about 1.0 to 0.8, phenol(s) to formaldehyde, at a pH of less than 7 using an acid catalyst such as HCl, wherein at least one of the phenols is a phenolsulfonic acid or alkali metal salt thereof. Preferably, the phenols comprise, in addition to the sulfonic acid or salt thereof, a sulfone, for example, dihydroxy aromatic diphenol sulfone. Such condensation products contain in addition to sulfonic acid groups or alkali metal salts thereof sulfone groups, i.e.,

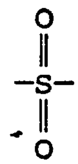

groups.

Other exemplary stainblockers suitable for use in the present invention are condensation products of formaldehyde with bis(hydroxyphenyl)sulfone and phenylsulfonic acid. Instead of, or in addition to, formaldehyde, another aldehyde such as, for example, acetaldehyde, furfuraldehyde, or benzaldehyde, can be used to make the condensation product. Also, other phenolic compounds such as, for example, bis-(hydroxyphenyl)alkane, e.g., 2,2-bis(hydroxyphenyl)propane, and bis(hydroxyphenyl)ether compounds can be used instead of, or in addition to, the bis(hydroxyphenyl) sulfone. These products are partially sulfonated, i.e., have a sulfonic acid equivalent weight of about 300-1200, preferably 400-900. Examples of such products are disclosed in U.S. Patent 4,592,940. Also commercially available condensation products are available such as FX-369, a stain release product available from 3M Company, NB001-31-1, available from Peach State Laboratories of Dalton, Georgia, Intratex N, available from Crompton and Knowles Corp., Erional PA, available from Ciba-Geigy Corp., Nylofixan P, available from Sandoz, Ltd., Mesitol NBS, available from Mobay Chemical Corp, Resist #4, available from Lyndal Chemical Co., Ameriolate, available from American Emulsions Co., Inc., and Synthabond 1938, available from Piedmont Chemical Industries. Sulfonation of phenolic compounds is taught, for example, in Sulfonated and Related Reactions , E. E. Gilbert, Interscience Publishers, 1965. Condensation of phenolformaldehyde resins is taught, for example, in Phenolic Resins , A. Knopf et al., Springer-Verlag, 1985.

From an economic view, condensation products which find particular application include those prepared from relatively inexpensive, commercially available monomers such as phenol, diphenolsulfone, formaldehyde, ortho- and paraphenolsulfonic acids or salts thereof, and mono- and disulfonated diphenolsulfones or salts thereof. Examples of such salts can include the ammonium, sodium, potassium, or lithium salts thereof. In addition to formaldehyde, aldehydes, such as furfuraldehyde or benzaldehyde, are particularly useful. Also, instead of or in addition to phenol or phenols, a corresponding naphthol or naphthols are particularly useful; for example, instead of sodium phenolsulfonate, sodium naththol sulfonate may be used.

The amount of stainblocker utilized should be an amount sufficient to provide the desired degree of stain resistance to the polyamide fiber. Generally, when the substrate is nylon 66, lower amounts can be used than when the substrate is nylon 6. When the polyamide material is a heatset carpet yarn which is heatset under moist conditions, e.g., in an autoclave, generally large amounts are required than yarn heatset under substantially dry conditions. Preferably, the amount of stainblocker used is preferably at least about 0.75 weight percent, more preferably at least about 1.0 weight percent, most preferably at least about 1.5 weight percent, based on the weight of the polyamide fiber when the fiber is nylon 66. Preferably, the amount of stainblocker used is preferably at least about 1.0 weight percent, more preferably at least about 1.5 weight percent, based on the weight of the polyamide fiber when the fiber is nylon 6.

The stainblocker can be applied to the polyamide fibers using procedures known to persons skilled in the art. For instance, the stainblocker can be applied from an aqueous solution including for a spin finish. In such applications, the pH of the solution is preferably below about 7, more preferably below about 5.

The stainblocker can also be applied from an aqueous exhaust bath such as is used in beck dyeing of carpet. The stainblocker can be added to the aqueous dye bath solution and exhausted concurrently with the dye. Generally, the dye bath is maintained at a temperature at or near the boiling point for a period of 10 to 90 minutes or more to effect exhaustion of the dye and the stainblocker.

In addition, fluorochemicals can also be applied to the polyamide fibers in combination with the stainblocker. Examples of suitable fluorochemicals are disclosed in United States Patent 4,680,212, which is hereby incorporated by reference.

The invention is further exemplified by the examples below, which are presented to illustrate certain specific embodiments of the invention, but are not intended to limit the bounds of the invention.

## EXAMPLES

Throughout the Examples, all percentages are by weight, unless otherwise specified.

The terminal amino-group content and terminal carboxylic end content of the nylon 6 reported in the Examples was determined using standard titration procedures. The procedure comprised dissolving nylon 6 in 68:32 by volume phenol-methanol and solution, titrating the amine end groups to a potentiometric end point using aqueous HCl. The carboxylic acid content was determined by titrating the dissolved nylon 6 to a cresol red end point with methanolic NaOH. Depth of staining is determined by measuring the total color difference of the dry samples (often called delta E) as determined under the CIE L*a*b* color system using a daylight 5500 standard illuminate. Further details on CIE L*a*b* measurements and total color difference may be found in color science literature -- one source would be Principles of Color Technology, 2nd Edition by Fred Billmeyer and Max Saltzman. A section of unstained carpet served as the standard from which the color difference of the stained carpet is determined. The larger the value of delta E, the more staining that has occurred. A delta E of less than 5 is considered substantially unstained.

Relative viscosity was determined by the flow in an Ubbelohde viscometer using 1% by weight of nylon dissolved in 90:10 weight ratio solution of formic acid and water.

## EXAMPLE I

Various amounts of unsubstituted epsilon-caprolactone was added to nylon 6 powder and mixed thoroughly by shaking in a plastic bag. The resulting material was conventionally melt spun and processed into a 715 denier, 14 filament yarn. A control yarn was also prepared using the identical procedure except that no unsubstituted epsilon-caprolactone was utilized. The resulting yarns were tested for amino end groups, carboxy end groups, and color (lower E indicates less yellowing). The results of the tests are shown in Table I.

TABLE I

| Test No. | Caprolactone % | RV | AEG | CEG | COLOR E |
|---|---|---|---|---|---|
| A (Control) | 0 | 2.67 | 33.9 | 48.8 | -- |
| B | 0.04 | 2.65 | 33.4 | 50.3 | 0.22 |
| C | 0.20 | 2.69 | 28.2 | 51.4 | 1.12 |
| D | 0.40 | 2.68 | 22.6 | 50.4 | 1.18 |
| E | 0.80 | 2.62 | 12.5 | 51.6 | 0.89 |

## EXAMPLE II

In order to further illustrate the effectiveness of the invention, larger amounts of unsubstituted epsilon-caprolactone were incorporated with nylon 6 and formed into fibers in the same manner as Example I. The results of the tests are shown in Table II.

TABLE II

| Test No. | Caprolactone % | RV | AEG | CEG |
|---|---|---|---|---|
| F (Control) | 0 | 2.69 | 33.5 | 47.9 |
| G | 1 | 2.66 | 9.8 | 50.8 |
| H | 2 | 2.61 | 4.7 | 51.9 |

The results of the test show the effectiveness of caprolactone in reducing amino end groups. The relative viscosity remained substantially unchanged, which allows constant conditions during fiber extrusion. In addition, the fibers did not exhibit undesirable yellowness.

## EXAMPLE III

The nylon 6 yarns were prepared by adding various amounts of unsubstituted epsilon-caprolactone to solid nylon 6 chips by means of a metering pump. The unsubstituted epsilon-caprolactone contacted the nylon 6 chips at the throat of a fiber extruder. Thereafter, the nylon 6 fibers were melt extruded and processed into yarn. Thereafter, the nylon 6 yarn was tufted into a cut pile carpet.

The yarn of the carpet contained 2% by weight FX-369 stain blocker. In addition, the carpet was treated with a fluorocarbon overspray.

The carpets were stained using the following procedure:

(a) Approximately three 3" squares were cut from each carpet.

(b) A 0.054 gm/l solution of FD&C Red Dye No. 40 was prepared.

(c) A 1-5/8" diameter metal ring was placed on the carpet sample. 10 ml. of above-described solution was evenly pipetted over the area within the ring. This procedure was done to two samples for each treatment.

(d) Carpet samples were air dried at ambient temperature for 24 hours. For each different carpet, one stained carpet section was rinsed in cold water and dried. The other stained sample was not rinsed.

Thereafter, amino end group content and the amount of staining (Delta E) were measured. The results of these tests is shown in Table III below.

TABLE III

| Carpet | Caprolactone % | Amino End Groups | Delta E Red Drink Stain |
|---|---|---|---|
| 1 | 0 (Control) | 44.07 | 10.07 |
| 2 | 0.58 | 22.58 | 2.62 |
| 3 | 0.68 | 20.20 | 3.11 |
| 4 | 0.80 | 17.83 | 2.74 |
| 5 | 0.97 | 14.45 | 2.37 |
| 6 | 1.19 | 12.38 | 4.79 |
| 7 | 1.54 | 9.70 | 3.54 |

The results of these tests show that by reducing the amino end group level of a polyamide fiber with a caprolactone, the effectiveness of the stainblocker is improved. Below an amino end group level of 20-25 equivalents/$10^6$ gm does not further improve stain protection.

Although certain preferred embodiments of the invention have been described for illustrative purposes, it will be appreciated that various modifications and innovations of the procedures and compositions recited herein may be affected without departure from the basic principles which underlie the invention. Changes of this type are therefore deemed to lie within the spirit and scope of the invention except as may be necessarily limited by the claims below or reasonable equivalents thereof.

## Claims

1. A polyamide fiber having reduced amino end groups, comprising:

(a) a polyamide; and

(b) an effective amount of a caprolactone reacted with said polyamide, said caprolactone having the general formula:

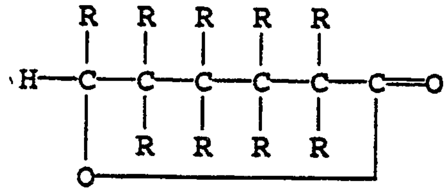

wherein each R is independently selected from the group consisting of hydrogen, alkyl, cycloalkyl, alkoxy, single ring aromatic moieties, and mixtures thereof; with the proviso that the total number of carbon atoms of the R substituents does not exceed 12 carbon atoms and at least 6 of the R substituents are hydrogen.

2. The polyamide fiber recited in Claim 1 wherein said polyamide is selected from the group consisting of nylon 6, nylon 66, and mixtures thereof.

3. The polyamide fiber recited in Claim 2 where R is selected from the group consisting of hydrogen, methyl, ethyl, propyl, methoxy, ethoxy, cyclohexyl, phenyl, and mixtures thereof.

4. The polyamide fiber recited in Claim 2 wherein said caprolactone is selected from the group consisting of
unsubstituted epsilon-caprolactone;
2-methyl epsilon-caprolactone;
6-ethyl epsilon-caprolactone;
3-propyl epsilon-caprolactone;
4-n -butyl epsilon-caprolactone;
5-isopentyl epsilon-caprolactone;
5,5'-dimethyl epsilon-caprolactone;
2-methyl-6-ethyl epsilon-caprolactone;
6-octyl epsilon-caprolactone;
6-cyclohexyl epsilon-caprolactone;
6-benzyl epsilon-caprolactone;
2,4,6-trimethyl epsilon-caprolactone;
2,3,3',4,5,6 hexamethyl epsilon-caprolactone;
and mixtures thereof.

5. The polyamide fiber recited in Claim 4 wherein said amount of caprolactone is in the range of from about 0.5 to about 2 percent by weight based on the weight of said polyamide.

6. The polyamide fiber recited in Claim 5 wherein said caprolactone is unsubstituted epsilon-caprolactone.

7. The polyamide fiber recited in Claim 6 wherein said polyamide is nylon 6.

8. A stain resistant polyamide fiber comprising:

(a) a polyamide;

(b) an effective amount of a caprolactone reacted with said polyamide, said caprolactone having the general formula:

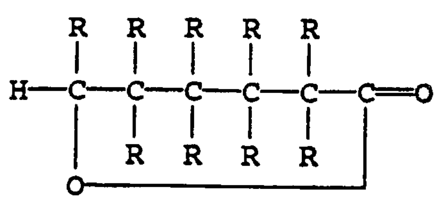

wherein each R is independently selected from the group consisting of hydrogen, alkyl, cycloalkyl, alkoxy, single ring aromatic moieties, and mixtures thereof; with the proviso that the total number of carbon atoms of the R substituents does not exceed 12 carbon atoms and at least 6 of the R substituents are hydrogen; and

(c) an effective amount of a stainblocker.

9. The polyamide fiber recited in Claim 8 wherein said polyamide is selected from the group consisting of nylon 6, nylon 66, and mixtures thereof.

10. The polyamide fiber recited in Claim 9 where R is selected from the group consisting of hydrogen, methyl, ethyl, propyl, methoxy, ethoxy, cyclohexyl, phenyl, and mixtures thereof.

11. The polyamide fiber recited in Claim 9 wherein said caprolactone is selected from the group consisting of
unsubstituted epsilon-caprolactone;
2-methyl epsilon-caprolactone;
6-ethyl epsilon-caprolactone;
3-propyl epsilon-caprolactone;
4-n -butyl epsilon-caprolactone;
5-isopentyl epsilon-caprolactone;
5,5′-dimethyl epsilon-caprolactone;
2-methyl-6-ethyl epsilon-caprolactone;
6-octyl epsilon-caprolactone;
6-cyclohexyl epsilon-caprolactone;
6-benzyl epsilon-caprolactone;
2,4,6-trimethyl epsilon-caprolactone;
2,3,3′,4,5,6-hexamethyl epsilon-caprolactone;
and mixtures thereof.

12. The polyamide fiber recited in Claim 11 wherein said stainblocker is a sulfonated naphthol- or sulfonated phenolaldehyde condensation product.

13. The polyamide fiber recited in Claim 12 wherein said stainblocker is a condensation product comprising bis(hydroxyphenyl) sulfone and formaldehyde or acetaldehyde.

14. The polyamide fiber recited in Claim 12 wherein said caprolactone is present in an amount in the range of from about 0.5 to about 2 percent by weight based on the weight of said polyamide.

15. The polyamide fiber recited in Claim 14 wherein said polyamide is nylon 6.

16. The polyamide fiber recited in Claim 15 wherein said lactone is unsubstituted epsilon-caprolactone.

17. The polyamide fiber recited in Claim 16 wherein said stainblocker is present in an amount at least 1.5 percent by weight of polyamide fiber.

18. A carpet containing the fibers of Claim 17.

19. A method of reducing the number of amino end groups of one or more polyamide fibers comprising:

(a) incorporating an effective amount caprolactone with a polyamide, said caprolactone having the formula:

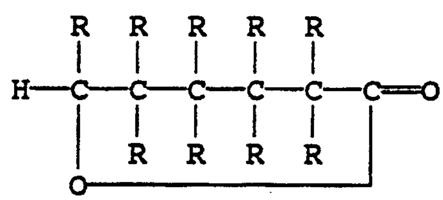

wherein each R is independently selected from the group consisting of hydrogen, alkyl, cycloalkyl, alkoxy, single ring aromatic hydrocarbon moieties, and mixtures thereof; with the proviso that the total number of carbon atoms of the R substituents does not exceed 12 carbon atoms and at least 6 of the R substituents are hydrogen; and

(b) melt extruding the admixture of step (a) into one or more fibers.

20. The method recited in Claim 19 wherein said polyamide is selected from the group consisting of nylon 6, nylon 66, and mixtures thereof.

21. The method recited in Claim 20 where R is selected from the group consisting of hydrogen, methyl, ethyl, propyl, methoxy, ethoxy, cyclohexyl, phenyl, and mixtures thereof.

22. The method recited in Claim 21 wherein said caprolactone is selected from the group consisting of
unsubstituted epsilon-caprolactone;
2-methyl epsilon-caprolactone;
6-ethyl epsilon-caprolactone;
3-propyl epsilon-caprolactone;
4-n -butyl epsilon-caprolactone;
5-isopentyl epsilon-caprolactone;
5,5′-dimethyl epsilon caprolactone;
2-methyl-6-ethyl epsilon-caprolactone;
6-octyl epsilon-caprolactone;

6-cyclohexyl epsilon-caprolactone;
6-benzyl epsilon-caprolactone;
2,4,6-trimethyl epsilon-caprolactone;
2,3,3′,4,5,6-hexamethyl epsilon-caprolactone;
and mixtures thereof.

23. The method recited in Claim 22 wherein said caprolactone is present in an amount in the range of from about 0.5 to about 2 percent by weight based on the weight of said polyamide.

24. The method recited in Claim 23 wherein said caprolactone is unsubstituted epsilon-caprolactone.

25. The method recited in Claim 24 wherein said polyamide is nylon 6.

26. A method of preparing one or more stain-resistant polyamide fibers comprising:

(a) incorporating an effective amount of caprolactone with a polyamide, said caprolactone having the formula:

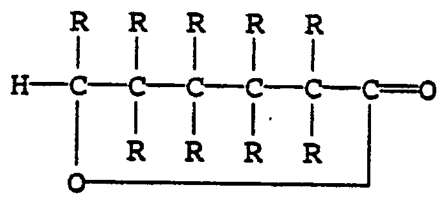

wherein each R is independently selected from the group consisting of hydrogen, alkyl, cycloalkyl, alkoxy, single ring aromatic hydrocarbon moieties, and mixtures thereof; with the proviso that the total number of carbon atoms of the R substituents does not exceed 12 carbon atoms and at least 6 of the R substituents are hydrogen;

(b) melt extruding the admixture of step (a) into one or more fibers; and

(c) contacting said one or more fibers of step (b) with an effective amount of stainblocker.

27. The method recited in Claim 26 wherein said polyamide is selected from the group consisting of nylon 6, nylon 66, and mixtures thereof.

28. The method recited in Claim 27 where R is selected from the group consisting of hydrogen, methyl, ethyl, propyl, methoxy, ethoxy, cyclohexyl, phenyl, and mixtures thereof.

29. The method recited in Claim 27 wherein said caprolactone is:
unsubstituted epsilon-caprolactone;
2-methyl epsilon-caprolactone;
6-ethyl epsilon-caprolactone;
3-propyl epsilon-caprolactone;
4-n -butyl epsilon-caprolactone;
5-isopentyl epsilon-caprolactone;
5,5′-dimethyl epsilon-caprolactone;
2-methyl-6-ethyl epsilon-caprolactone;
6-octyl epsilon-caprolactone;
6-cyclohexyl epsilon-caprolactone;
6-benzyl epsilon-caprolactone;
2,4,6-trimethyl epsilon-caprolactone;
2,3,3′,4,5,6-hexamethyl epsilon-caprolactone;
and mixtures thereof.

30. The method recited in Claim 29 wherein said stainblocker is a sulfonated naphthol- or sulfonated phenol-formaldehyde condensation product.

31. The method recited in Claim 30 wherein said stainblocker is a condensation product comprising bis-(hydroxyphenyl) sulfone and formaldehyde or acetaldehyde.

32. The method recited in Claim 31 wherein said caprolactone is present in an amount in the range of from about 0.5 to about 2 percent by weight based on the weight of said polyamide.

33. The method recited in Claim 32 wherein said stainblocker is present in an amount in the range of at least 1.5 percent by weight of polyamide fiber.

34. The method recited in Claim 33 wherein said caprolactone is unsubstituted epsilon-caprolactone.